Europäisches Patentamt

European Patent Office

Office européen des brevets

(19)

(11) Veröffentlichungsnummer: **0 096 209**
**B1**

(12) **EUROPÄISCHE PATENTSCHRIFT**

(45) Veröffentlichungstag der Patentschrift:
**19.02.86**

(51) Int. Cl.⁴: **F 16 L 37/28**, F 16 L 37/12

(21) Anmeldenummer: **83104149.6**

(22) Anmeldetag: **28.04.83**

(54) **Vorrichtung zum Trennen von Flüssigkeitsleitungsenden.**

(30) Priorität: **03.06.82 DE 8216059 U**

(43) Veröffentlichungstag der Anmeldung:
**21.12.83 Patentblatt 83/51**

(45) Bekanntmachung des Hinweises auf die Patenterteilung:
**19.02.86 Patentblatt 86/8**

(84) Benannte Vertragsstaaten:
**BE DE FR GB IT NL**

(56) Entgegenhaltungen:
**DE - A - 2 525 760**
**DE - A - 2 717 135**
**US - A - 1 968 421**
**US - A - 3 330 299**

(73) Patentinhaber: **Wiese GmbH & Co. KG,
D-5840 Schwerte 1 (DE)**

(72) Erfinder: **Fluck, Hans-Joachim, Gersdorffstrasse 26,
D-4600 Dortmund 50 (DE)**
Erfinder: **Seltenheim, Volker, Hugo Sickmannstrasse 9,
D-4600 Dortmund 50 (DE)**
Erfinder: **Wiese, Knut, Gottlieb-Levermann-Strasse 7,
D-4600 Dortmund 50 (DE)**
Erfinder: **Von Dahlern, Michael, Dipl.-Ing.,
Wellenbrock 32, D-4530 Ibbenbüren 2 (DE)**

(74) Vertreter: **Patentanwälte Meinke und Dabringhaus
Dipl.-Ing. J. Meinke Dipl.-Ing. W. Dabringhaus,
Westenhellweg 67, D-4600 Dortmund 1 (DE)**

## Beschreibung

Die Erfindung richtet sich auf eine Vorrichtung zum Trennen einer Flüssigkeitsleitung an einem stationären Anschlussort von einer Flüssigkeitsleitung an einem beweglichen Ladeobjekt mit an beiden Leitungsenden angeordneten Kupplungsflanschen sowie drehbaren Verschlusskörpern, die über Betätigungsschwenkhebel und eine die Schwenkhebel beaufschlagende, insbesondere hydraulisch oder pneumatisch verschiebbare Schubstange in die Verschlussstellung schwenkbar sind, und mit die Kupplungsflansche gegeneinander spannenden, über die Bewegung der Schubstange im Schnelltrennfall lösbaren Klemmbacken.

Bei einer bekannten Vorrichtung (DE-B Nr. 2717135) kann über eine Sicherheitseinrichtung die Schubstange ebenso in Schliessstellung verfahren werden wie über eine hydraulische oder pneumatische Antriebseinheit. Im Schnelltrennfall bleibt die Schubstange an einer Hälfte der Kupplung, z. B. an derjenigen der beweglichen Flüssigkeitsleitung. In der Praxis hat sich gezeigt, dass die frei bewegliche Schubstange im Schnelltrennfall ungesteuerte Bewegungen ausführt, so dass sie selbst verbogen werden oder aber andere in der unmittelbaren Umgebung befindliche Teile beschädigen kann.

Aufgabe der Erfindung ist die Schaffung einer Lösung, mit der unter Beibehaltung der Vorteile der bekannten Lösung eine freie Bewegung der Schubstange ebenso unterbunden wird wie eine sichere Steuerung gewährleistet bleibt, wobei gleichzeitig ein weiteres Ziel darin besteht, beim Trennen mit Hilfe der Schubstange eine zusätzliche Verriegelungssicherheit gegen ungewolltes Öffnen der nicht gekuppelten Leitung zu erreichen.

Mit einer Vorrichtung der eingangs bezeichneten Art wird diese Aufgabe der Erfindung dadurch gelöst, dass die Schubstange im Bereich der Schwenkhebel an jedem Flüssigkeitsleitungsende verlierungsfrei geführt und geteilt ausgebildet ist.

Aus der DE-B Nr. 2525760 ist eine Rohrkupplung bekannt mit an jedem Kupplungsflansch angeordneten Sperrelementen, die überzwei gegenüberliegende Kupplungsarme betätigt werden. Diese Kupplungsarme entsprechen aber nicht der vorliegenden Schubstange, da sie dort lediglich dazu dienen, beim Öffnen der Kupplung einen Schwenkhebel nachzuschleppen, der ein Ventil betätigt, d. h. diese Stangen reagieren, sie agieren nicht im Sinne der vorliegenden Erfindung. Auch liegen sie auf verschiedenen Seiten der Kupplung, d. h. sie bilden keine einheitliche Schubstange.

In Ausgestaltung ist nach der Erfindung vorgesehen, dass die Schwenkhebel, die mit einem Bereich in Ausnehmungen der Schubstangen eingreifen, mit einem auf der anderen Seite des Schwenkmittelpunktes liegenden Verriegelungsansatz ausgerüstet sind, der sich in der Schliessbzw. Trennstellung an dem jeweiligen Teil der zugeordneten Schubstange anlegt.

Durch diese Massnahme wird erreicht, dass der Verriegelungsansatz ein Überdrehen der Verschlusskörper aus der Schliessstellung in eine Öffnungs- bzw. teilweise Öffnungsstellung verhindert, da diese Bewegung von der Schubstange gesperrt ist. D.h., ein Öffnen des Ventiles wäre nur möglich, wenn die Schubstange wieder in die Öffnungsstellung zurückverfahren wird. Damit ist mit konstruktiv sehr einfachen Mitteln eine sehr wirkungsvolle Sperrung der Flüssigkeitsleitungsenden gegeben.

Die Erfindung sieht auch vor, dass die Kupplungsflansche von zwei Paar von Spannbacken gegeneinander in dichtendem Eingriff gehalten sind, wobei die Spannbacken an gegeneinander bewegbaren Klammerhebeln angeordnet sind, wobie die Klammerhebel, wie an sich bekannt, von einem Verbindungsbügel in der Verschlusslage gehalten sind, der im Fall der Schnelltrennung von der Schubstange ausser Eingriff sprengbar ist, wobei in weiterer Ausgestaltung vorgesehen sein kann, dass zum Aussprengen des Verbindungsbügels an der Schubstange ein Mitnehmernocken vorgesehen ist, der sich im Fall der Schnelltrennung an einem Bereich des Verbindungsbügels anlegt und diesen durch fortgesetzte Schubbewegung ausser Eingriff treibt.

Weitere Merkmale, Einzelheiten und Vorteile der Erfindung ergeben sich aufgrund der nachfolgenden Beschreibung sowie anhand der Zeichnung. Diese zeigt in

Fig. 1 eine Ansicht auf den Kupplungsbereich zweier Flüssigkeitsleitungsenden mit teilweise entfernten, die Spannbacken tragenden Klammerhebeln;

Fig. 2 eine Ansicht gemäss Pfeil II in Fig. 1 ;

Fig. 3 eine Aufsicht auf einen Verbindungsbügel gemäss Pfeil III in Fig. 2 sowie in

Fig. 4 eine Aufsicht gemäss Pfeil IV in Fig. 1 ohne Klammerhebel.

Zwei nicht näher dargestellte Flüssigkeitsleitungen 1 und 2 sind je mit einem Kugelventilgehäuse 4 und 5 ausgestattet, die je einen Verbindungsflansch 6 und 7 aufweisen, die in der Gebrauchslage, d.h. in der Verschlusslage, von zwei Paar von Spannbacken 8 gegeneinander verspannt werden, die an Klammerhebeln 9 vorgesehen sind. Die Klammerhebel 9 sind auf der einen Seite drehbar gegeneinander an einer Montageplatte 10 befestigt und werden von einem um einen an einem Klammerhebel befestigten Drehbolzen 11 schwenkbaren Verbindungsbügel 12 gegeneinander verspannt, wobei sich der Verbindungsbügel 12 an einer Gleitfläche 13 am anderen Klammerhebel abstützt und dort verspannt ist. Der Verbindungsbügel 12 trägt auch noch einen Mitnehmernocken 14, dessen Funktion weiter unten näher beschrieben wird.

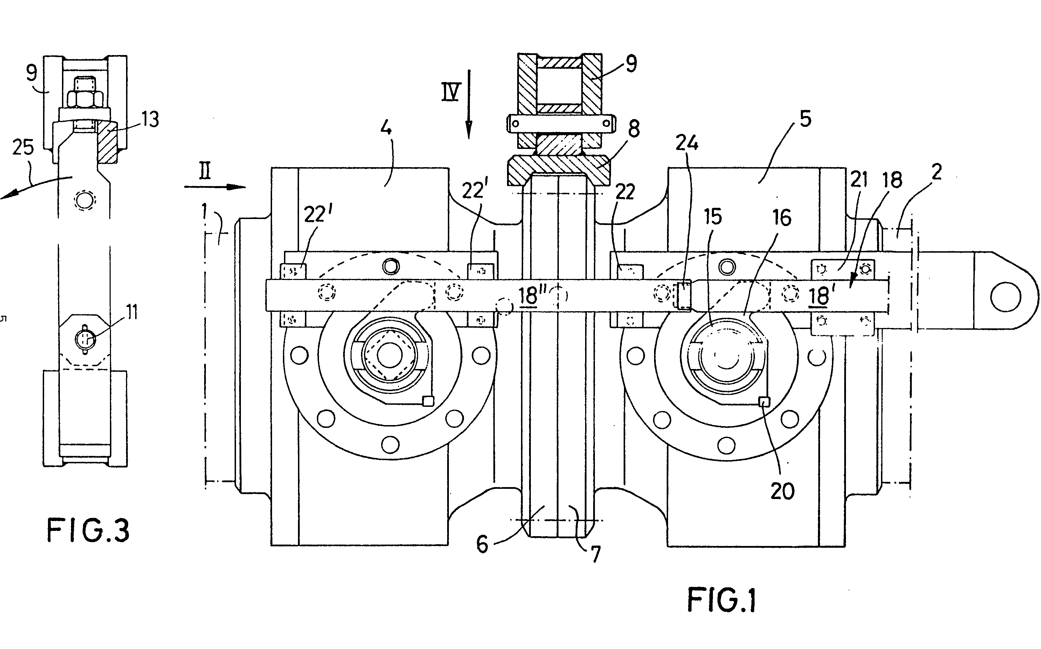

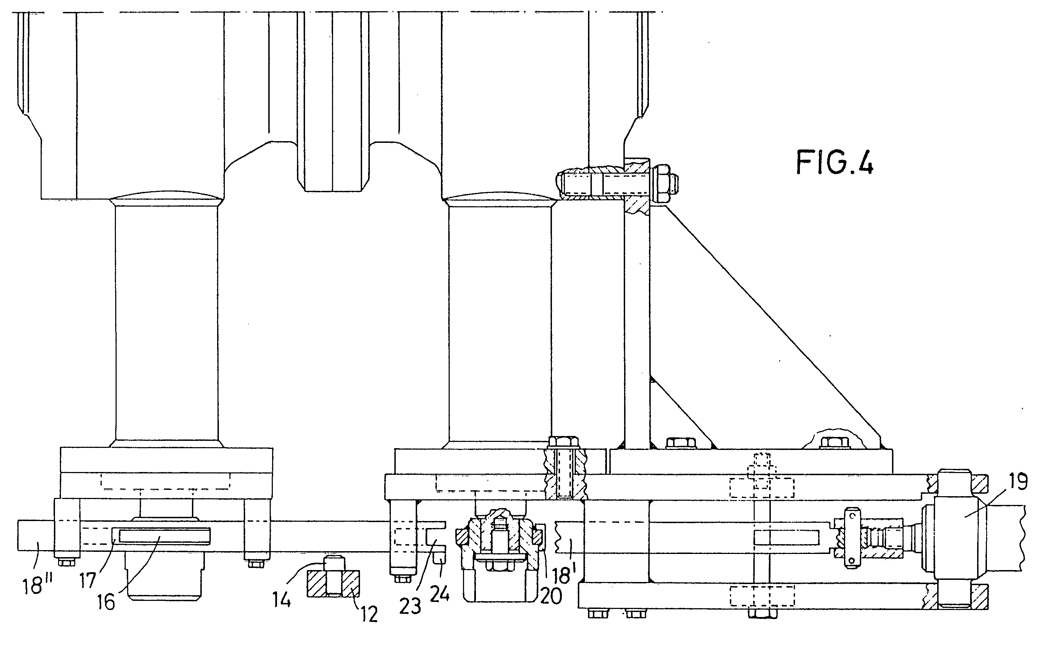

Wie sich aus den Fig. 1 und 4 ergibt, enden die Betätigungswellen der nicht näher dargestellten Kugelhähne in den Gehäusen 4 und 5 in Schwenkhebeln 15, die mit einem Steuernocken 16 in entsprechende Schlitze 17 einer geteilten Schubstang 18 eingreifen, die von einer z. B. hydraulischen Kolben/Zylindereinheit 19 oder einem anderen Antreibmittel bewegt werden kann, wie dies nur beispielsweise in Fig. 4 wiedergegeben ist.

Zur besseren Identifizierung der beiden Schubstangenteile der Schubstange 18 sind diese mit 18' bzw. 18'' bezeichnet. Die Schwenkhebel 15 weisen auf ihrer dem Steuernocken 16 gegenüberliegenden Seite relativ zum Schwenkmittelpunkt einen Verriegelungsansatz 20 auf, der sich im Fall eines Schliessens der Ventile 4 und 5 an dem jeweiligen Schubstangenteil 18' bzw. 18'' anlegt. Die Schubstange 18 ist an jedem Kugelventilgehäuse 4 und 5 verlierungsfrei in Führungsböcken 21 bzw. 22 geführt. Wie sich aus Fig. 1 in Verbindung mit Fig. 4 ergibt, greift das Schubstangenteil 18' mit seinem freien Ende in eine Nut 23 am Schubstangenteil 18'' ein, so dass im Fall der Trennung sich die beiden Schubstangenteile 18' und 18'' voneinander lösen können.

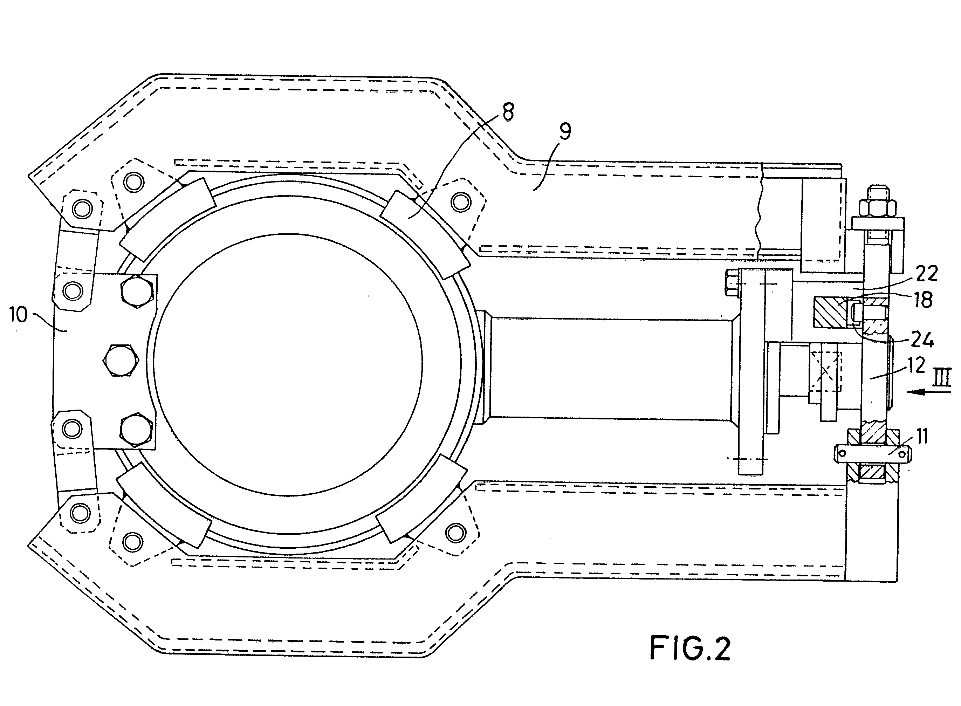

Am stirnseitigen Ende des Schubstangenteiles 18'', welches die Ausnehmung 23 aufweist, ist ein nach aussen ragender Mitnehmernocken 24 angeordnet, der sich im Fall der Trennung bzw. des Verschiebens der Schubstange zum Schliessen der Enden an den Mitnehmerbolzen 14 anlegt, der in seine Bewegungsbahn ragt, wie sich dies aus Fig. 4 in Verbindung mit Fig. 2 ergibt.

Die Wirkungsweise der Vorrichtung ist die folgende:

Wird die Schubstange 18 zum Zwecke einer Schnelltrennung oder aber zum Zwecke einer Lösung der Teile voneinander oder aus anderen Gründen in Fig. 1 nach links verschoben, so verschwenken die Schwenkhebel 15 die innenliegenden Kugelhähne der Rohrleitungsenden. Gleichzeitig wird der Verriegelungsansatz verschwenkt und auch die Trennstelle der beiden Schubstangenteile 18' und 18'' bewegt sich nach links in Fig. 1 und kommt allmählich in den Bereich der Trennebene der beiden Flansche 6 und 7. Gleichzeitig erhält auch der Schubstangenteil 18' zwei eigene Führungen, er ist nämlich dann sowohl im Lagerbock 21 als auch im Lagerbock 22 geführt.

Nach Erreichen der Schliessstellung der Ventile kann die Schubstange noch weiter verschoben werden, der Mitnehmernocken 24 stösst dann an den Mitnehmerbolzen 14 des Verbindungshebels 12 und treibt diesen über die Gleitfläche 13 dann ausser Angriff vom in Fig. 3 oberen Klammerhebel 9, was in Fig. 3 mit dem Pfeil 25 angedeutet ist. Durch Vorspannung der beiden Klammerhebel 9 springen diese nach Freigabe durch den Verbindungsbügel 12 derart auf, dass alle Spannbakken 8 ausser Eingriff geraten und damit die Flansche 6 und 7 freigegeben sind.

Natürlich ist das beschriebene Ausführungsbeispiel der Erfindung noch in vielfacher Hinsicht abzuändern, ohne den Grundgedanken der Erfindung zu verlassen. So ist die Erfindung, wie bereits erwähnt, insbesondere nicht auf einen hydraulischen oder pneumatischen Antrieb der Schubstange 18 beschränkt. Hier kann in gleicher Weise eine Reissleine angeordnet sein u. dgl. mehr.

## Patentansprüche

1. Vorrichtung zum Trennen einer Flüssigkeitsleitung an einem stationären Anschlussort von einer Flüssigkeitsleitung an einem beweglichen Ladeobjekt mit an beiden Leitungsenden angeordneten Kupplungsflanschen (6, 7) sowie drehbaren Verschlusskörpern, die über Betätigungsschwenkhebel (15) und eine die Schwenkhebel beaufschlagende, insbesondere hydraulisch oder pneumatisch verschiebbare Schubstange (18) in die Verschlussstellung schwenkbar sind, und mit die Kupplungsflansche (6, 7) gegeneinander spannenden, über die Bewegung der Schubstange (18) im Schnelltrennfall lösbaren Klemmbacken (8), dadurch gekennzeichnet, das die Schubstange (18) im Bereich der Schwenkhebel (15) an jedem Flüssigkeitsleitungsende verlierungsfrei geführt und geteilt ausgebildet ist.

2. Vorrichtung nach Anspruch 1, dadurch gekennzeichnet, dass die Schwenkhebel (15), die mit einem Bereich (16) in Ausnehmungen (17) der Schubstangen (18) eingreifen, mit einem auf der anderen Seite des Schwenkmittelpunktes liegenden Verriegelungsansatz (20) ausgerüstet sind, der sich in der Schliess- bzw. Trennstellung an dem jeweiligen Teil der zugeordneten Schubstange anlegt.

3. Vorrichtung nach einem der vorangehenden Ansprüche, dadurch gekennzeichnet, dass die Kupplungsflansche (6, 7) von zwei Paar von Spannbacken (8) gegeneinander in dichtendem Eingriff gehalten sind, wobei die Spannbacken (8) an gegeneinander bewegbaren Klammerhebeln (9) angeordnet sind, wobei die Klammerhebel (9), wie an sich bekannt, von einem Verbindungsbügel (12) in der Verschlusslage gehalten sind, der im Fall der Schnelltrennung von der Schubstange (18) ausser Eingriff sprengbar ist.

4. Vorrichtung nach Anspruch 3, dadurch gekennzeichnet, dass zum Aussprengen des Verbindungsbügels (12) an der Schubstange (18) ein Mitnehmernocken (24) vorgesehen ist, der sich im Fall der Schnelltrennung an einem Bereich des Verbindungsbügels anlegt und diesen durch fortgesetzte Schubbewegung ausser Eingriff treibt.

## Claims

1. Apparatus for separating a fluid conduit at a stationary connecting location from a fluid conduit at a movable load-carrying object, comprising coupling flanges disposed at both conduit ends and rotatable closure members which can be pivoted into the closure position by way of pivotal actuating levers and a pushrod which acts on the pivotal levers and which is displaceable in particular hydraulically or pneumatically, and comprising clamping jaws which brace the coupling flanges against each other and which in the event of high-speed disconnection can be released by way of the movement of the pushrod, characterised in that the pushrod (18) is guided in the region of the pivotal levers (15) at each fluid con-

duit end in a loss-free fashion and is of a divided configuration.

2. Apparatus according to Claim 1, characterised in that the pivotal levers (15) which engage with a portion (16) in openings (17) in the pushrods (18) are provided with a locking projection (20) which is disposed on the other side of the centre of pivotal movement and which, in the closure or separation position, bears against the respective part of the associated pushrod.

3. Apparatus according to one of the preceding claims, characterised in that the coupling flanges (6, 7) are held against each other in sealing engagement by two pairs of clamping jaws (8), wherein the clamping jaws (8) are arranged on clamp levers (9) which are movable towards each other, wherein the clamp levers (9), as is known per se, are held in the closure position by a connecting bar (12) which, in the event of high-speed disconnection, can be sprung out of engagement by the pushrod (18).

4. Apparatus according to Claim 3, characterised in that an entrainment projection (24) is provided on the pushrod (18) for springing the connecting bar (12) out of engagement, which entrainment projection (24), in the event of high-speed disconnection, bears against a portion of the connecting bar and drives same out of engagement by virtue of continued thrust movement.

## Revendications

1. Dispositif pour dissocier un conduit à liquide en un lieu de raccordement stationnaire d'un conduit à liquide sur un objet mobile d'alimentation, comprenant des brides d'accouplement (6, 7) disposées aux deux extrémités des conduits (1, 2), des corps obturateurs rotatifs auxquels des pivotements peuvent être imprimés à la position d'obturation par l'intermédiaire de leviers pivotants d'ac-

tionnement (15) et d'une tige de poussée (18) qui agit sur les leviers pivotants et peut coulisser en particulier hydrauliquement ou pneumatiquement, ainsi que des mâchoires de serrage (8) bloquant l'une contre l'autre les brides d'accouplement (6, 7) et pouvant être séparées en cas de dissociation rapide grâce au mouvement de la tige de poussée (18), caractérisé par le fait que, au voisinage des leviers pivotants (15), la tige de poussée (18) est guidée de manière imperdable à chaque extrémité d'un conduit à liquide et est de réalisation scindée.

2. Dispositif selon la revendication 1, caractérisé par le fait que les leviers pivotants (15), en prise par une région (16) dans des évidements (17) des tiges de poussée (18), sont équipés d'une saillie de verrouillage (20) qui, située de l'autre côté du centre de pivotement, s'applique en position respective de fermeture ou de dissociation contre la partie considérée de la tige de poussée associée.

3. Dispositif selon l'une des revendications précédentes, caractérisé par le fait que les brides d'accouplement (6, 7) sont maintenues en prise mutuelle étanche, par deux paires de mâchoires de serrage (8), ces mâchoires de serrage (8) étant disposées sur des tirants (9) mobiles l'un vers l'autre, lesquels tirants (9) sont maintenus en position d'obturation d'une manière connue par l'intermédiaire d'un étrier de liaison (12) qui peut être dégagé par déclic de la tige de poussée (18) en cas de dissociation rapide.

4. Dispositif selon la revendication 3, caractérisé par le fait qu'il est prévu sur la tige de poussée (18), en vue du dégagement par déclic de l'étrier de liaison (12), un tenon d'entraînement (24) qui, en cas de dissociation rapide, s'applique contre une région de l'étrier de liaison et amène ce dernier hors prise par une poursuite du mouvement de coulissement.

FIG.3

FIG.1

FIG.2

0 096 209

FIG.4

0 096 209

6

18" 17 16 14 12 23 24 18' 20 19